# EUROPEAN PATENT APPLICATION

(11) **EP 2 442 324 A1**
(43) Date of publication of application: **18.04.2012**
(21) Application number: 11275118.5
(22) Date of filing: 04.10.2011
(51) Int. Cl.: H01G 9/028, H01G 9/07, C25D 11/02

(54) **Method of manufacturing solid electrolytic capacitor**

(30) Priority: 12.10.2010 KR 20100099395
(71) Applicant: Samsung Electro-Mechanics Co., Ltd, Suwon, Gyunggi-Do (KR)
(72) Inventor: Cho,, Tai Yon, Gyunggi-do (KR); Kim,, Kwan Hyeong, Gyunggi-do (KR); Cho,, Jae Bum, Seoul (KR); Hong,, Jeong Oh, Seoul (KR)
(74) Representative: Powell, Timothy John

(57) **Abstract**

There is provided a method of manufacturing a solid electrolytic capacitor including: forming a conductive polymer layer on a surface of a metal pellet; and forming a dielectric layer between the metal pellet and the conductive polymer layer. Because the conductive polymer layer is directly formed on the surface of the metal pellet, the conductive polymer layer can be uniformly formed, and because there is no need to form an electrode on the surface of the dielectric layer, the process can be reduced. In addition, because the uniform polymer film is formed irrespective of the size of metal pores and the shape of the capacitor, a capacity of the capacitor can be maximized.

## Description

### CROSS-REFERENCE TO RELATED APPLICATIONS

This application claims the priority of Korean Patent Application No. 10-2010-0099395 filed on October 12, 2010, in the Korean Intellectual Property Office, the disclosure of which is incorporated herein by reference.

### BACKGROUND OF THE INVENTION

### Field of the Invention

The present invention relates to a method of manufacturing a solid electrolytic capacitor, and more particularly, to a method of manufacturing a solid electrolytic capacitor capable of forming a uniform polymer film, irrespective of the size of a metal pore and the shape of a capacitor, by directly forming a conductive polymer layer on a surface of a metal pellet, thus maximizing the capacity of the capacitor.

### Description of the Related Art

In general, a solid electrolytic capacitor is an electronic component used to interrupt a DC current and allow an AC current to pass therethrough, as well as to accumulate electricity. A tantalum capacitor, the most typical capacitor among solid electrolytic capacitors, is commonly used for an application circuit having a low rated voltage usage range, as well as for general industrial devices, and in particular, a tantalum capacitor is commonly used to reduce noise in a circuit or in a portable communications device whose frequency characteristics are problematic.

In the related art process for manufacturing a solid electrolytic capacitor, first, a dielectric layer is formed on a surface of a metal, and subsequently, a conductive polymer layer is formed on the dielectric layer through electrochemical polymerization. In this case, in order to provide conductivity to the dielectric layer, which may have the characteristics of a non-conductor, a conductive polymer layer is formed through chemical oxidation polymerization in advance and electrochemical polymerization is then performed.

In the related art manufacturing method, since the conductive polymer should be formed on the surface of the non-conductive dielectric layer, it is difficult to evenly form the conductive polymer film across the entire surface of the dielectric layer, making it difficult to form an electrode, which results in a limitation of a capacity implementation rate, and, in order to form the conductive polymer film on the surface of the non-conductive dielectric layer, a plurality of processes such as chemical oxidation polymerization and electrochemical polymerization are required.

### SUMMARY OF THE INVENTION

An aspect of the present invention provides a method of manufacturing a solid electrolytic capacitor capable of implementing a capacitor having maximized capacity by forming a conductive polymer layer directly on a surface of a metal pellet and then forming a dielectric layer between the metal pellet and the conductive polymer layer through anodization.

According to an aspect of the present invention, there is provided a method of manufacturing a solid electrolytic capacitor, the method including: forming a conductive polymer layer on a surface of a metal pellet; and forming a dielectric layer between the metal pellet and the conductive polymer layer.

The dielectric layer may be formed by anodizing the metal pellet.

The dielectric layer may be formed by immersing the metal pellet with the conductive polymer layer formed thereon in an electrolytic solution.

The conductive polymer layer may be formed through electropolymerization.

In the forming of the conductive polymer layer, the conductive polymer layer may be formed by immersing the metal pellet in a solution including a monomer of the polymer and an oxidizing agent to perform polymerization on the surface of the metal.

The monomer may be selected from the group consisting of thiophene-based, imide-based, pyrrole-based, aniline-based, and purane-based monomers, and either ferric chloride or ammonium persulfate may be used as the oxidizing agent.

Any one selected from among tantalum (Ta) , aluminum (Al), or niobium (Nb) may be used as the metal.

The metal pellet may have pores having a size of 0.01 µm to 10 µm.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a sectional view of a solid electrolytic capacitor according to an embodiment of the present invention;
FIG. 2 is a view showing a process of manufacturing a solid electrolytic capacitor according to an embodiment of the present invention;
FIG. 3 is a flowchart illustrating a process of manufacturing a solid electrolytic capacitor according to an embodiment of the present invention; and
FIG. 4 is a view showing a process of manufacturing a solid electrolytic capacitor according to the related art.

### DETAILED DESCRIPTION OF THE PREFERRED EMBODIMENT

Embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions may be exaggerated for clarity, and the same reference numerals will be used throughout to designate the same or like components.

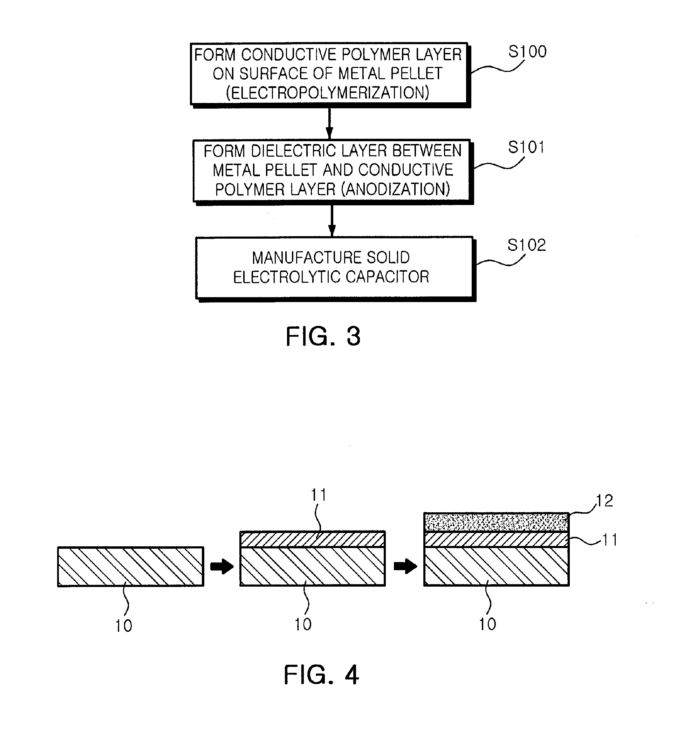

FIG. 4 is a view showing a process of manufacturing a solid electrolytic capacitor according to the related art.

As shown in FIG. 4, first, in order to form a dielectric layer 11 on a surface of a metal pellet 10, a dielectric oxide film is formed through anodization.

Next, in order to provide conductivity to the dielectric oxide film having the dual characteristics of a dielectric and a non-conductor to apply a conductive polymer as a negative electrode (or a cathode) of the capacitor through electrochemical polymerization, a conductive polymer layer 12 is formed in advance through chemical oxidation polymerization. Here, the formation of the conductive polymer layer 12 through chemical oxidation polymerization is repeatedly performed several times by using a polymer monomer and an oxidizing agent.

Then, an outer electrode made of a particular material is applied to an upper portion of the element obtained by completing the formation of the conductive polymer layer 12 chemically and electrochemical polymerization is performed thereon through a galvanostatic method (or a constant current process) to form a polymer layer. Thereafter, a solid electrolytic capacitor is manufactured through a process commonly known in the art.

However, as mentioned above, in the related art method of manufacturing a solid electrolytic capacitor, it is difficult to evenly form the conductive polymer film on the entirety of the surface of the dielectric layer, there is a limitation of a capacity implementation rate, and a plurality of processes such as chemical oxidation polymerization and electrochemical polymerization are required.

An embodiment of the present invention will now be described with reference to the accompanying drawings.

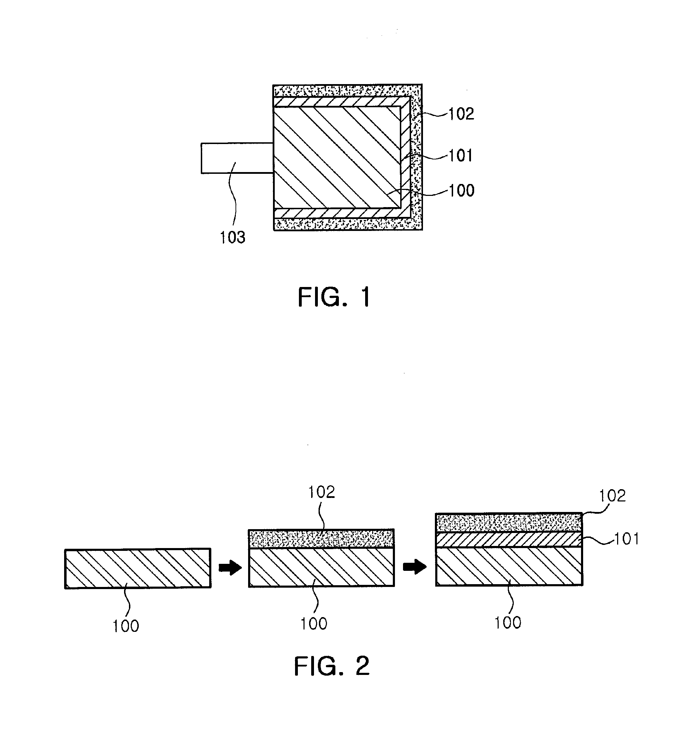

FIG. 1 is a sectional view of a solid electrolytic capacitor according to an embodiment of the present invention.

FIG. 2 is a view showing a process of manufacturing a solid electrolytic capacitor according to an embodiment of the present invention.

FIG. 3 is a flowchart illustrating a process of manufacturing a solid electrolytic capacitor according to an embodiment of the present invention.

With reference to FIGS. 2 and 3, a method of manufacturing a solid electrolytic capacitor according to the present embodiment includes forming a conductive polymer layer 102 on a surface of a metal pellet 100 (S100); and forming a dielectric layer 101 between the metal pellet 100 and the conductive polymer layer 102 (S101).

In the forming of the conductive polymer layer 102 on the surface of the metal pellet 100 (S100), the conductive polymer layer 102 may be formed on the metal pellet 100 through electropolymerization, and the metal pellet 100 may be immersed in a solution including a monomer of the conductive polymer 102 and an oxidizing agent to perform polymerization on the surface of the metal pellet 100.

The conductive polymer layer 102 is formed to serve as a negative electrode layer of the solid electrolytic capacitor, it is required to have conductivity.

As for the conductive polymer layer 102, any conductive polymer may be used so long as it can be used as a negative electrode. For example, any one of polythiophene, polyimide, polypyrrole, polyaniline, and polypurane may be used therefor.

Here, the monomer may be selected from the group consisting of thiophene-based, imide-based, pyrrole-based, aniline-based, and purane-based monomers.

The oxidizing agent is an electron doner providing electrons to a polymerized polymer to allow the polymer to exhibit desired conductivity.

The oxidizing agent may be, for example, ferric chloride or ammonium persulfate.

As the metal used as a positive electrode (or an anode) of the solid electrolytic capacitor, any one selected from among tantalum (Ta), aluminum (Al), or niobium (Nb) may be used.

In the present embodiment, after the forming of the conductive polymer layer 102 on the surface of the metal pellet 100 (S100), anodization is performed in order to form a dielectric layer between the surface of the metal pellet 100 and the conductive polymer layer 102 (S101).

The forming of the dielectric oxide film through anodization follows a general process.

Namely, a positive electrode wire 103 made of the same material as that of the metal pellet 100 is inserted into an upper end portion of the metal pellet 100 and used as a positive electrode, and annodization is performed on the metal pellet 100 having the conductive polymer layer 102 formed thereon in a phosphoric acid aqueous solution under a condition of a certain temperature to form the dielectric oxide film between the metal pellet 100 and the conductive polymer layer 102 (S101), and thus a general solid electrolytic capacitor in which the metal pellet 100, the dielectric layer 101, and the conductive polymer layer 102 are sequentially formed may be manufactured (S102).

The dielectric layer 101 is formed between the metal pellet 100 and the conductive polymer layer 102 by using the structural characteristics of the conductive polymer. Namely, since the conductive polymer film has fine pores allowing a material to pass therethrough, the dielectric oxide film may be formed in the inside of the conductive polymer layer 102 through anodization.

In the solid electrolytic capacitor manufactured by the method of manufacturing a solid electrolytic capacitor according to the embodiment of the present invention as described above, unlike the related art, the forming of the conductive polymer layer 102 on the surface of the metal pellet 100 is performed before the forming of the dielectric layer 101 on the surface of the metal pellet 100, so the conductive polymer film can be uniformly formed on the surface of the metal pellet 100. Thus, even in case of a metal pellet having pores having a size of 0.01 µm to 10 µm, a conductive polymer film can be easily formed on the metal pellet irrespective of the size of the pores thereof.

Also, since there is no need to form a conductive polymer film for electropolymerization on the surface of the dielectric layer, a plurality of processes including forming a conductive polymer film by repeatedly performing chemical oxidation polymerization and electrochemical polymerization on the surface of the dielectric layer as in the related art are not required, whereby the manufacturing process may be simplified.

Namely, the plurality of processes required to form the conductive polymer film on the surface of the non-conductive dielectric layer are not required in the present invention.

In the method of manufacturing a solid electrolytic capacitor according to the embodiment of the present invention, since the conductive polymer film is directly formed on the surface of the metal pellet, the polymer film can be evenly formed, and thereafter, the dielectric oxide film is formed between the metal pellet and the conductive polymer film through anodization, and thus the capacity of the capacitor is maximized irrespective of the size of the pores and the shape of the capacitor.

As set forth above, in a solid electrolytic capacitor manufactured by a method of manufacturing a solid electrolytic capacitor according to embodiments of the invention, a conductive polymer layer can be uniformly formed since it is directly formed on a surface of a metal pellet, and a manufacturing process can be simplified since there is no need to form an electrode on the surface of the dielectric layer. In addition, because a polymer film can be uniformly formed irrespective of the size of metal pores and the shape of the capacitor, the capacity of the capacitor can be maximized.

While the present invention has been shown and described in connection with the embodiments, it will be apparent to those skilled in the art that modifications and variations can be made without departing from the spirit and scope of the invention as defined by the appended claims.

## Claims

1. A method of manufacturing a solid electrolytic capacitor, the method comprising:
forming a conductive polymer layer on a surface of a metal pellet; and
forming a dielectric layer between the metal pellet and the conductive polymer layer.

2. The method of claim 1, wherein the dielectric layer is formed by anodizing the metal pellet.

3. The method of claim 1, wherein the dielectric layer is formed by immersing the metal pellet with the conductive polymer layer formed thereon in an electrolytic solution.

4. The method of claim 1, wherein the conductive polymer layer may be formed through electropolymerization.

5. The method of claim 1, wherein, in the forming of the conductive polymer layer, the conductive polymer layer is formed by immersing the metal pellet in a solution including a monomer of the conductive polymer and an oxidizing agent to perform polymerization on the surface of the metal pellet.

6. The method of claim 5, wherein the monomer is selected from the group consisting of thiophene-based, imide-based, pyrrole-based, aniline-based, and purane-based monomers.

7. The method of claim 5, wherein the oxidizing agent is either ferric chloride or ammonium persulfate.

8. The method of claim 1, wherein the metal pellet is made of any one selected from among tantalum (Ta), aluminum (Al), or niobium (Nb).

9. The method of any one of claims 1 to 8, wherein the metal pellet has pores having a size of 0.01 µm to 10 µm.
